# EUROPÄISCHE PATENTSCHRIFT

(11) **EP 0 547 477 B1**
(45) Veröffentlichungstag und Bekanntmachung des Hinweises auf die Patenterteilung: **24.05.1995**
(21) Anmeldenummer: 92120893.0
(22) Anmeldetag: 08.12.1992
(51) Int. Cl.: E03C 1/042, F16B 13/12

(54) **Befestigungsvorrichtung an Rosetten**
Fastening device for cover flange
Dispositif de fixation de disque de récouvrement

(30) Priorität: 18.12.1991 DE 4141790
(43) Veröffentlichungstag der Anmeldung: 23.06.1993
(73) Patentinhaber: FRIEDRICH GROHE AKTIENGESELLSCHAFT, D-58675 Hemer (DE)
(72) Erfinder: Heimann, Bruno, W-5758 Fröndenberg-Ardey (DE); Dickel, Harald, W-5860 Iserlohn (DE)

(56) Entgegenhaltungen:
- EP-A- 0 155 484
- DE-A- 1 500 895
- DE-A- 3 243 946
- DE-A- 3 445 520
- DE-A- 3 907 587
- DE-C- 910 588
- GB-A- 498 172

## Beschreibung

Die Erfindung betrifft eine Befestigungsvorrichtung an Rosetten bei Unterputz-Wasserarmaturen, bei der die Rosette mit einem oder mehreren Halteelementen an einer Gebäudewand fixierbar ist.
Eine derartige Rosettenausbildung ist aus der Druckschrift DE 39 07 587 A1 bekannt. Hierbei ist die Rosette mit Gewindeschrauben an der Unterputz-Wasserarmatur befestigt. Mit den Gewindeschrauben kann jedoch leicht die Rosette beim Anmontieren übermäßig stark gegen die Gebäudewand gepreßt werden, wobei dann eine Verformung, die meist mit einer Veränderung der sichtbaren Oberfläche der Rosette einhergeht, auftreten kann, was äußerst unerwünscht ist. Darüber hinaus ist es bereits durch offenkundige Vorbenutzung bekanntgeworden, bei einer topfartigen, aus Kunststoff hergestellten Abdeckrosette einen einstückig mit der Abdeckrosette hergestellten Stutzen vorzusehen, in den in der Stecklage der Rosette eine Schraube zur Aufspreizung eindrehbar ist und somit die Rosette in der Stecklage relativ spannungsfrei zu halten. Mit dieser Einrichtung können jedoch nur relativ kleine Unterschiede in der Einbautiefe von Unterputz-Armaturen ausgeglichen werden.

Der Erfindung liegt die Aufgabe zugrunde, die bekannte Befestigungsvorrichtung zu verbessern und insbesondere so auszubilden, daß auch verhältnismäßig große, unterschiedliche Einbautiefen mit der Befestigungsvorrichtung kompensiert werden können.
Diese Aufgabe wird erfindungsgemäß dadurch gelöst, daß als Halteelemente zylindrische Hohlstifte mit jeweils einem Kopfteil vorgesehen sind, die in entsprechende Bohrungen der Rosette bis zur Anlage am Kopfteil einsetzbar sind, wobei die Hohlstifte zur Fixierung der Rosette an der Gebäudewand in Aufnahmebohrungen einschiebbar und mit eindrehbaren Schrauben in der Stecklage radial aufspreizbar sind.
Weitere Ausgestaltungen der Erfindung sind in den Ansprüchen 2 bis 6 angegeben.

Die mit der Erfindung erzielbaren Vorteile bestehen insbesondere darin, daß die Hohlstifte, je nach Einbautiefe der Unterputz-Armatur, ausgewählt bzw. ausgewechselt und mit der Rosette verbunden werden können. Die komplettierte Rosette kann danach mit den Hohlstiften an der Gebäudewand mit der gebotenen Vorspannung sicher mit einem Spreizen der Hohlstifte durch Eindrehen der Schrauben fixiert werden.
Bei einem zu flachen Einbau der Unterputz-Armatur in der Gebäudewand können auch zwei Rosetten übereinander angeordnet werden, wobei dann jeweils die Hohlstifte durch zwei Rosetten hindurchgreifen.

Ausführungsbeispiele der Erfindung sind in der Zeichnung dargestellt und werden im folgenden näher beschrieben. Es zeigt
- Figur 1: eine Rosette mit einer zum Teil dargestellten Unterputz-Armatur, montiert an einer Gebäudewand in der Schnittebene I der Figur 2;
- Figur 2: die in Figur 1 gezeigte Rosette in Vorderansicht;
- Figur 3: einen Teil der Abdeckrosette gemäß Figur 1 in vergrößerter Darstellung;
- Figur 4: einen in Figur 1 gezeigten Hohlstift in vergrößerter Darstellung im Längsschnitt;
- Figur 5: den in Figur 4 gezeigten Hohlstift in der Schnittebene V;
- Figur 6: zwei übereinander angeordnete Rosetten mit einem Hohlstift im Schnitt.

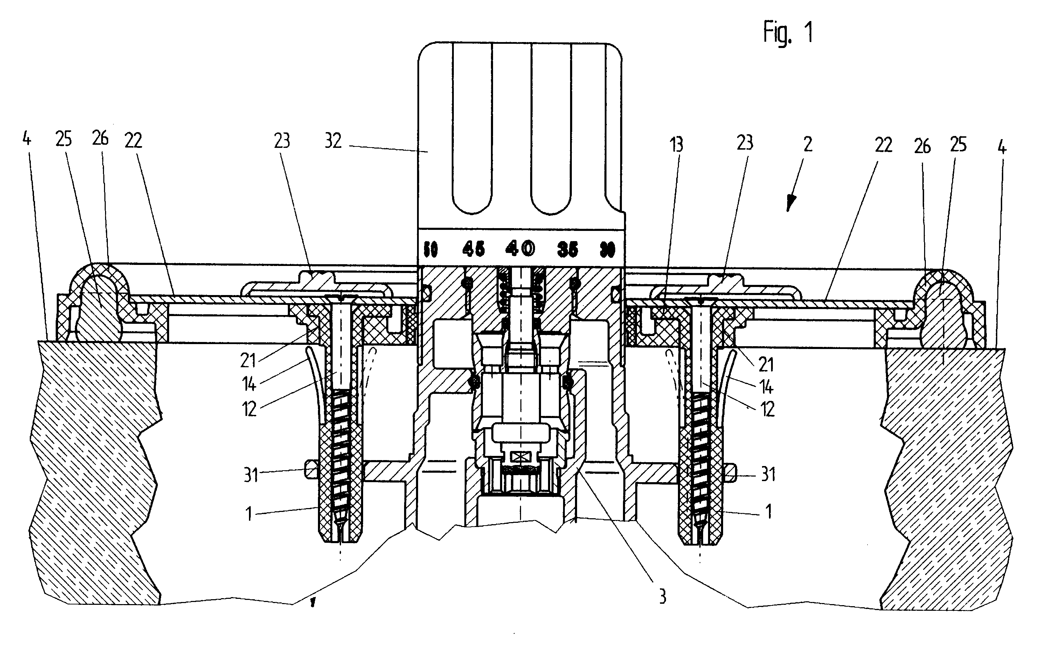

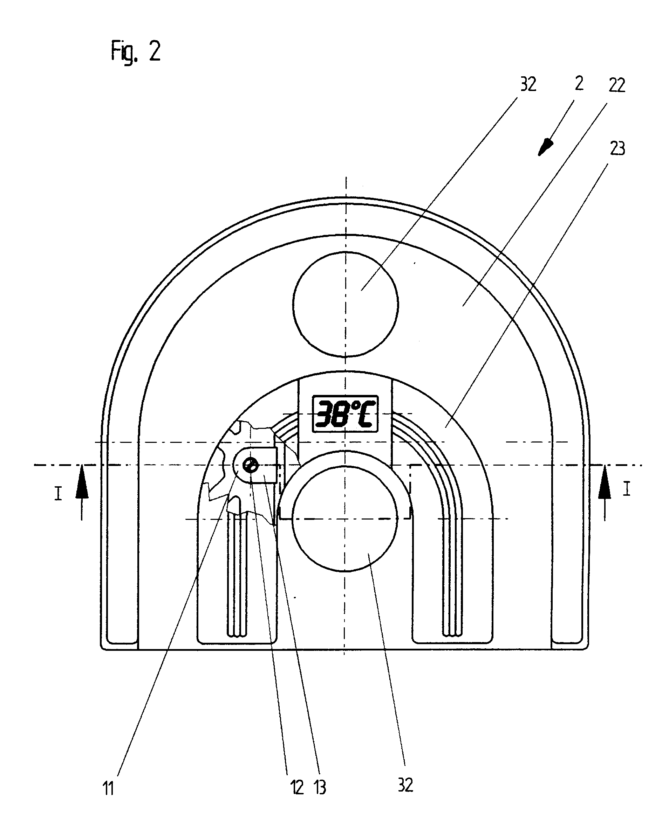

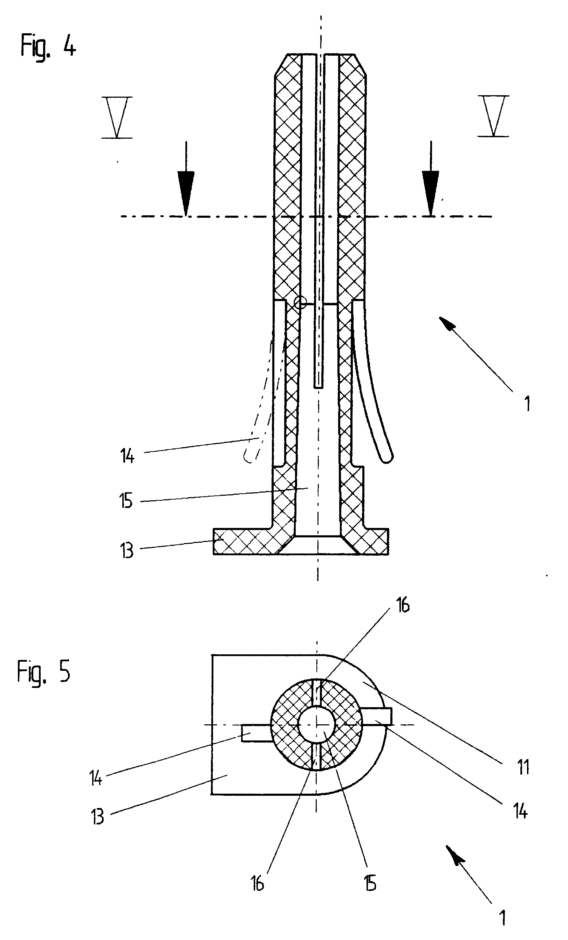

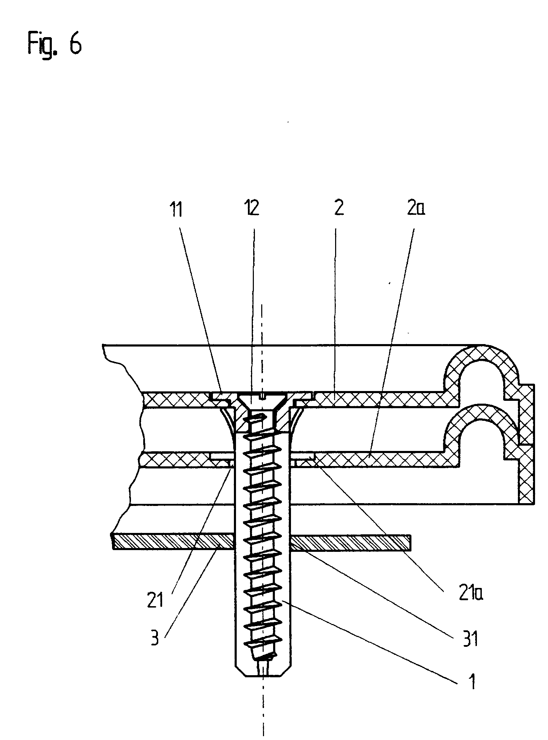

Die in der Zeichnung gezeigte Rosette 2 ist plattenförmig ausgebildet, wie es insbesondere aus Figur 1 und 2 zu entnehmen ist. An der äußeren Stirnseite der Rosette 2 ist eine Zierplatte 22 und oberhalb der Zierplatte 22 ein Zierring 23 angeordnet. Am äußeren Randbereich der Rosette 2 ist mit einem Wulst 26 ein Dichtring 25 aus Moosgummi eingelagert, um eine gute Abdichtung zur Gebäudewand 4 zu erreichen.
In Bohrungen 21 ist jeweils ein Hohlstift 1 lösbar angeordnet. Der Hohlstift 1 ist zylindrisch ausgebildet und trägt einen Kopfteil 11 mit einem radial ausgebildeten Vorsprung 13, wie es insbesondere aus Figur 4 und 5 der Zeichnung zu entnehmen ist. Das relativ flach ausgebildete Kopfteil 11 ist in der Stecklage in der Rosette 2 eingesenkt, wobei mit dem radial ausgebildeten Vorsprung 13 der Hohlstift 1 drehfest von der Rosette 2 aufgenommen ist. Der Hohlstift 1 weist eine koaxiale Bohrung 15 auf und hat außerdem im Mantelbereich zwei etwa diametral gegenüberliegend ausgebildete federnde Zungen 14, die nach dem Einstecken des Hohlstifts 1 in die Rosette 2 radial auslenken und ein unbeabsichtigtes Zurückziehen oder Herausfallen verhindern.
Die in der Gebäudewand installierte Unterputz-Armatur 3 kragt mit einem oder mehreren Stellgriffen 32 aus der Gebäudewand 4 vor, so daß die Rosette 2 mit den Hohlstiften 1 auf diese vorstehenden Teile der Unterputz-Armatur 3 aufgeschoben werden kann. Bei dem Aufschiebevorgang gelangen die Hohlstifte 1 jeweils in eine Aufnahmebohrung 31 der Unterputz-Armatur 3. Sobald die Rosette 2 mit dem Dichtring 25 dichtend an der Oberfläche der Gebäudewand 4 zur Anlage gelangt, werden in koaxial angeordneten Bohrungen 15 der Hohlstifte 1 Schrauben 12 eingedreht. Beim Eindrehvorgang werden die mit Längsschlitzen 16 im vorderen Bereich geteilten Hohlstifte 1 im Bereich der Aufnahmebohrung 31 radial auseinandergepreßt, so daß mit eingedrehten Schrauben 12 die Rosette 2 über die Hohlstifte 1 mit Reibschluß in der Stecklage an der Unterputz-Armatur 3 gehaltert ist.

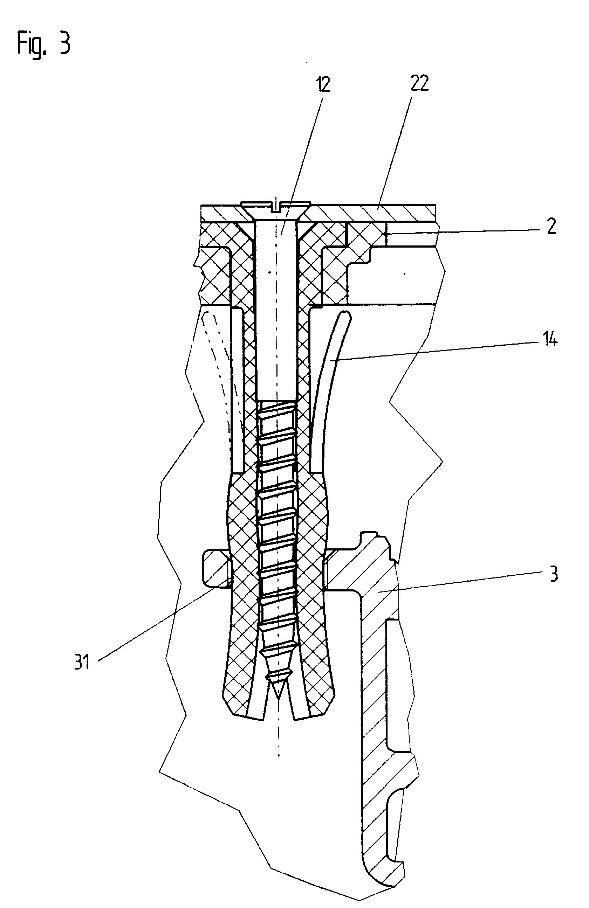

In Figur 3 der Zeichnung ist der Spreizvorgang der Hohlstifte 1 in vergrößerter Darstellung gezeigt. Die Rosette 2 wird hierbei durch die Schraube 12 nicht gegen die Gebäudewand 4 gepreßt, sondern sie bewirkt lediglich die radiale Verpressung des Hohlstifts 1 in der Aufnahmebohrung 31. Da somit übermäßige Verspannungen der Rosette 2 an der Gebäudewand 4 ausgeschlossen werden, kann die Rosette 2 kostengünstig aus Kunststoff im Spritzgußverfahren hergestellt werden.
Entsprechend der individuellen Tiefe der Einbaulage der Unterputz-Armatur 3 kann die Rosette 2 mit entsprechend langen Hohlstiften bestückt werden. Eine besondere Bevorratung von Rosetten 2 mit unterschiedlich langen Hohlstiften 1 ist somit nicht erforderlich.
Bei der Installation von Unterputz-Armaturen kommt es gelegentlich vor, daß die Unterputz-Armatur 3 zu flach in der Gebäudewand 4 installiert worden ist. In diesem Fall können zwei Rosetten 2,2a übereinander angeordnet werden, wie es insbesondere aus Figur 6 zu entnehmen ist. In diesem Fall trägt lediglich die äußere Rosette 2 die Hohlstifte 1 in der erforderlichen Länge, die durch die Bohrung 21 und der Einsenkung 21a der unteren Rosette 2a hindurchgeführt ist. Durch Eindrehen der Schraube 12 wird wiederum eine entsprechende Verspreizung des Hohlstifts 1 bewirkt, so daß beide Rosetten 2, 2a in der Steckposition sicher fixiert sind.

## Patentansprüche

1. Befestigungsvorrichtung an Rosetten bei Unterputz-Wasserarmaturen, bei der die Rosette mit einem oder mehreren Halteelementen an einer Gebäudewand fixierbar ist, dadurch gekennzeichnet, daß als Halteelement zylindrische Hohlstifte (1) mit jeweils einem Kopfteil (11) vorgesehen sind, die in entsprechende Bohrungen (21) der Rosette (2) bis zur Anlage am Kopfteil (11) einsetzbar sind, wobei die Hohlstifte (1) zur Fixierung der Rosette (2) an der Gebäudewand (4) in Aufnahmebohrungen (31) einschiebbar und mit eindrehbaren Schrauben (12) in der Stecklage radial aufspreizbar sind.

2. Befestigungsvorrichtung nach Anspruch 1, dadurch gekennzeichnet, daß das Kopfteil (11) gestuft ausgebildet ist, so daß es in einer entsprechend gestuften Bohrung (21) der Rosette (2) bündig einsetzbar ist.

3. Befestigungsvorrichtung nach Anspruch 1 oder 2, dadurch gekennzeichnet, daß die Hohlstifte (1) mit federnden Zungen (22) in der Rosette (2) axial in der Stecklage gesichert sind.

4. Befestigungsvorrichtung nach einem der Ansprüche 1 bis 3, dadurch gekennzeichnet, daß das Kopfteil (11) mit einem radialen Vorsprung (13) zur drehfesten Kupplung mit der Rosette (2) versehen ist.

5. Befestigungsvorrichtung nach einem der Ansprüche 1 bis 4, dadurch gekennzeichnet, daß die Hohlstifte (1) in Aufnahmebohrungen (31) der Unterputz-Armatur (3) einschiebbar sind.

6. Befestigungsvorrichtung nach einem der Ansprüche 1 bis 5, dadurch gekennzeichnet, daß die Hohlstifte (1) im zylindrischen Bereich einen oder mehrere Längsschlitze (16) aufweisen.

## Claims

1. Fastening device on rosettes for concealed water fittings, in which device the rosette is fixable to a building wall by means of one or more holding elements, characterised in that there are provided as holding elements cylindrical hollow pins (1), each having a head part (11), which pins are insertable in corresponding bores (21) in the rosette (2) as far as the head part (11), the hollow pins (1) for fixing the rosette (2) to the building wall (4) being insertable in receiving bores (31) and being expansible radially in the inserted position by means of screws (12) that can be screwed in.

2. Fastening device according to claim 1, characterised in that the head part (11) is of stepped construction so that it can be inserted flush with a correspondingly stepped bore (21) in the rosette (2).

3. Fastening device according to claim 1 or 2, characterised in that the hollow pins (1) are secured axially in the inserted position in the rosette (2) by means of resilient tongues (22).

4. Fastening device according to any one of claims 1 to 3, characterised in that the head part (11) is provided with a radial projection (13) for the purpose of coupling it, so that it does not rotate, with the rosette (2).

5. Fastening device according to any one of claims 1 to 4, characterised in that the hollow pins (1) are insertable into receiving bores (31) in the concealed fitting (3).

6. Fastening device according to any one of claims 1 to 5, characterised in that the hollow pins (1) have one or more longitudinal slots (16) in their cylindrical region.

## Revendications

1. Dispositif de fixation de rosaces autour de robinets d'eau encastrés, dans lequel la rosace peut être fixée à la paroi du bâtiment par un ou plusieurs éléments de maintien, caractérisé en ce que l'élément de maintien est constitué par des fiches cylindriques creuses (11) qui peuvent être enfoncées dans des trous correspondants (21) de la rosace jusqu'à venir en appui par leurs têtes (11), les fiches creuses (1) pouvant également être enfoncées dans des trous (31) de la paroi (4) du bâtiment et dilatées dans cette position enfoncée, par introduction et rotation de vis (12) dans ces tiges.

2. Dispositif de fixation selon la revendication 1, caractérisé en ce que la tête (11) comporte un gradin de sorte qu'elle peut être logée à fleur dans un alésage (21), également à gradin, de la rosace (2).

3. Dispositif de fixation selon la revendication 1 ou 2, caractérisé en ce que les fiches creuses (1) sont bloquées axialement dans la rosace (2) par des languettes élastiques (22).

4. Dispositif de fixation selon une des revendications 1à 3, caractérisé en ce que la tête (11) est munie d'une saillie radiale (13) qui la solidarise en rotation avec la rosace (2).

5. Dispositif de fixation selon une des revendications 1 à 4, caractérisé en ce que les fiches (1) peuvent être engagées dans des alésages de réception (31), de la robinetterie encastrée (3).

6. Dispositif de fixation selon une des revendications 1 à 5, caractérisé en ce que les fiches (1) présentent une ou plusieurs fentes longitudinales dans leurs parties cylindriques.
